# EUROPEAN PATENT APPLICATION

(11) **EP 4 451 406 A1**
(43) Date of publication of application: **23.10.2024**
(21) Application number: 23752464.0
(22) Date of filing: 13.02.2023
(51) Int. Cl.: H01M 10/0562

(54) **GRAIN BOUNDARY- AND SURFACE-DOPED LITHIUM-LANTHANUM-ZIRCONIUM COMPOSITE OXIDE ELECTROLYTE, PREPARATION METHOD THEREFOR, AND APPLICATION THEREOF**

(30) Priority: 14.02.2022 CN 202210149801
(71) Applicant: Grirem Advanced Materials Co., Ltd., Beijing 100088 (CN); Rare Earth Functional Materials (Xiong'An) Innovation Center Co., Ltd., Baoding, Hebei 071700 (CN); Grirem Hi-Tech Co., Ltd., Langfang, Hebei 065201 (CN)
(72) Inventor: HUANG, Xiaowei, Beijing 100088 (CN); ZHANG, Xiaobao, Beijing 100088 (CN); YANG, Juanyu, Beijing 100088 (CN); WANG, Ning, Beijing 100088 (CN); FENG, Zongyu, Beijing 100088 (CN); XU, Yang, Beijing 100088 (CN); ZHONG, Qiang, Beijing 100088 (CN); XIAO, Yiyang, Beijing 100088 (CN)
(74) Representative: Huang, Liwei
(86) International application number: PCT/CN2023/075760
(87) International publication number: WO 2023/151686

(57) **Abstract**

The present invention relates to a solid electrolyte of lithium-lanthanum-zirconium composite oxide which is doped at surface and at grain boundary, a preparation method therefor, and an application thereof. Part of doping elements are step-doped at the grain boundary and the surface of the lithium-lanthanum-zirconium composite oxide solid electrolyte to improve the distribution state of the doping elements at the grain boundaries, reduce the number of grain boundaries, lower the grain boundary resistance of the lithium-lanthanum-zirconium composite oxide, thereby obtaining high ionic conductivity. The doping method has the advantages of being simple and convenient in process, low in cost and high in universality, can meet the requirements of different solid electrolytes on doping elements, and is suitable for large-scale application. The solid electrolyte obtained from the technical solution of the present invention can be used in fields such as all-solid-state lithium or lithium ion batteries, semi-solid lithium ion batteries, lithium air batteries and the like.

## Description

### CROSS-REFERENCE

The present application is based on and claims the priority of the Chinese patent application filed on February 14th, 2022 with the application number of 202210149801.9, which is incorporated herein in its entirety by reference.

### FIELD OF THE INVENTION

The present invention relates to the technical field of lithium ion batteries, and in particular, relates to a solid electrolyte of lithium-lanthanum-zirconium composite oxide which is doped at surface and at grain boundary, a preparation method therefor, and an application thereof. The solid electrolyte can be used in fields such as all-solid-state lithium metal or lithium ion batteries, semi-solid-state lithium ion batteries, and lithium air batteries.

### BACKGROUND OF THE INVENTION

Lithium-ion batteries have become the most promising energy storage devices because of their high operating voltage, high energy density, long cycle stability life, and low self-discharge rate. However, its problems are also becoming more and more prominent: the energy density of commercial lithium ion batteries (liquid electrolyte) reached 260 Wh kg⁻¹ in 2019, which is about to reach its limit. Liquid electrolytes are often organic solvents, there is a risk of leakage. At the same time, in some extreme environments, fire and other safety accidents are prone to occur, and there is a greater safety risk. Therefore, the use of solid electrolytes with excellent safety instead of liquid electrolytes is an effective strategy to solve the above problems. The ideal solid electrolyte should satisfy high ionic conductivity, stable interfacial compatibility, and good mechanical properties.

Lithium-lanthanum-zirconium-oxygen has gradually become the quintessential solid electrolyte since it was first successfully prepared in 2007, but its ionic conductivity is still two orders of magnitude lower than that of liquid electrolytes. It has been shown that elemental doping is an effective strategy to increase the conductivity of lithium-lanthanum-zirconium-oxygen ions. Currently, solid-phase reaction, sol-gel, and chemical precipitation methods are used to prepare lithium-lanthanum-zirconium-oxygen materials. In particular, the solid-phase method is a preferred method by virtue of simple preparation processes and large-scale production. It is well known that the lithium-lanthanum-zirconium-oxygen is polycrystalline in the structure, therefore, the effect of grain boundaries on its ionic conductivity cannot be neglected. It has been shown that the grain boundary resistance has a negative effect on its ionic conductivity in the lithium-lanthanum-zirconium-oxygen (Seungho Yu, Donald J. Siegel. Chem. Mater. 2017, 29, 9639-9647). Therefore, lowering the grain boundary resistance is remarkable for improving the ionic conductivity of the lithium-lanthanum-zirconium-oxygen composite oxide. David et al. performed hot-press on lithium-lanthanum-zirconium composite oxides at 1100°C, resulting in a lithium-lanthanum-zirconium composite oxide sample with a higher density (99% of the theoretical density) and larger grain sizes, reducing the contribution of grain boundary resistance to the total resistance (David, I. N.; Thompson, T.; Wolfenstine, J.; Allen, J. L.; Sakamoto, J. J. Am. Ceram. Soc. 2015, 98, 1209-1214). However, high-temperature hot pressing not only requires specialized equipment but also has low efficiency and is not suitable for large-scale production.

### SUMMARY OF THE INVENTION

Based on the above situation of the prior art, an objective of the present invention is to provide a solid electrolyte of lithium-lanthanum-zirconium composite oxide which is doped at surface and at grain boundary, a preparation method therefor, and an application thereof. Through grain boundary doping, doping elements can be located at the grain boundaries and surfaces of lithium lanthanum zirconium composite oxide solid electrolytes, which can also reduce the grain boundary resistance of the lithium-lanthanum-zirconium composite oxide, and at the same time, combine the advantages of high ionic conductivity and low cost.

In order to achieve the above objective, according to a first aspect of the present invention, provided is a solid electrolyte of lithium-lanthanum-zirconium composite oxide which is doped at surface and at grain boundary. The chemical formula of the solid electrolyte is Li₇₋ₓLa_{3-y}Zr_{2-z}M_{α}O_{12-β}D_{δ}; wherein M includes one or more cationic doping elements and D includes one or more anionic doping elements; and 0 ≤ x ≤ 3, 0 ≤ y ≤ 1.5, 0 ≤ z ≤ 1, 0 <α <3, 0 ≤ β ≤ 1.5, and 0 ≤ δ ≤ 1.

Further, at the grain boundary and the surface, the solid electrolyte contains an oxide of Li and M, or an oxide of Li and M with one or more selected from fluoride, sulfide, nitrogen-containing compound, phosphate, and complex thereof formed from Li, M, and D.

Further, the doping element M includes one or a combination of more than one selected from cations of Na, K, Rb, Cs, Mg, Ca, Sr, Ba, Ti, V, Cr, Mn, Fe, Co, Ni, Cu, Zn, B, Al, Ga, In, Si, Ge, Sn, Sb, Bi, Se, Te, Nb, Mo, Hf, Ta, W, and rare earth elements other than La.

Preferably, the doping element M includes one or a combination of more than one selected from the cations Ti, V, Mn, Fe, Co, Ni, Cu, Zn, Al, Ga, In, Ge, Sn, Sb, Te, Nb, Mo, Ta, Ce, Pr, Nd, Sm, Eu, Gd, Yb, Sc, and Y.

Further preferably, the doping element M includes one or a combination of more than one selected from the cations Mn, Fe, Co, Ni, Al, Ga, Nb, Ta, Ce, Pr, Nd, Sm, Gd, Yb, and Y.

The doping element D includes one or a combination of more than one selected from the anions of N, F, P, and S.

Further, the molar content of the doping element M is less than or equal to 12% of the molar amount of the solid electrolyte by mole.

The molar content of the doping element D is less than or equal to 5% of the molar amount of the solid electrolyte.

Further, Li and M, or Li, M, and D exist in a form including one or more selected from an oxide, fluoride, sulfide, nitrogen-containing compound, phosphate, and complex thereof at the grain boundary and the surface of the solid electrolyte.

Further, the lithium-lanthanum-zirconium composite oxide includes a garnet-type structure.

In a second aspect of the present invention, provided is a preparation method for the solid electrolyte of lithium-lanthanum-zirconium composite oxide which is doped at surface and at grain boundary according to the first aspect of the present invention, including the steps of:
S1, mixing aqueous solutions of lanthanum and zirconium compounds in a desired stoichiometric ratio to obtain a mixed material liquid; adding the mixed material liquid and an alkaline substance into a reactor for a precipitation reaction; performing suction filtration, washing, drying, and roasting on the obtained precipitate to obtain a lanthanum-zirconium oxide; and
S2, mixing the lanthanum-zirconium oxide with liquid salts of doping elements M and Li under a stirring condition in one or more steps, drying and then performing once or twice heat treatments, and then performing once or twice heat calcinations to obtain the solid electrolyte of lithium-lanthanum-zirconium composite oxide which is doped at surface and at grain boundary.

In a third aspect of the present invention, provided is a preparation method for the solid electrolyte of lithium-lanthanum-zirconium composite oxide which is doped at surface and at grain boundary according to the first aspect of the present invention, including the steps of:
S1, mixing aqueous solutions of lanthanum and zirconium, and M or a part of M compound in a desired stoichiometric ratio to obtain a mixed material liquid; adding the mixed material liquid and an alkaline substance into a reactor for a precipitation reaction; performing suction filtration, washing, drying, and roasting on the obtained precipitate to obtain an M-containing lanthanum-zirconium oxide; and
S2, mixing the M-containing lanthanum-zirconium oxide with a liquid salt of Li or a mixed liquid salt of the remaining doping element M and Li under a stirring condition in one or more steps, drying and then performing once or twice heat treatments, and then performing once or twice heat calcinations to obtain the solid electrolyte of lithium-lanthanum-zirconium composite oxide which is doped at surface and at grain boundary.

Further, all or part of Li in the form of solid salt is added to the M-containing lanthanum-zirconium oxide.

Further, the zirconium source in the mixed material liquid in step S1 includes one or a combination of more than one selected from zirconium oxychloride, zirconium oxynitrate, zirconium sulfate, zirconium acetate, and zirconium citrate; the lanthanum source includes one or a combination of more than one selected from lanthanum chloride, lanthanum nitrate, lanthanum sulfate, lanthanum acetate, and lanthanum citrate.

Further, the alkaline substance includes magnesium bicarbonate, urea, and at least one selected from hydroxide, carbonate, or bicarbonate containing at least one selected from ammonium, sodium, or potassium, preferably including at least one selected from sodium hydroxide, urea, aqueous ammonia, and ammonium bicarbonate.

Furthermore, in step S1, adding the mixed material liquid and the alkaline substance into the reactor for the precipitation reaction, the pH during the precipitation process is controlled in the range of 4.5-14, preferably 5-10; the endpoint pH of the precipitation is controlled at 8-13, preferably 9-11; the temperature is controlled at 0-120°C, preferably 10-80°C.

Further, the liquid salt of the doping element M or Li includes one or a combination of more than one selected from molten salt or aqueous solution of nitrate, acetate, sulfate, citrate, and an amino acid salt. The molar ratio of Li and M at the grain boundary and the surface is 10%-70%. The morphology and ratio of Li and M at the grain boundary and surface can be controlled by controlling precipitation parameters, heat treatment, and calcination temperature, time, and atmosphere of the product.

Further, doping element D is added in one or more of steps S1 and S2; the doping element D is derived from one or a combination of more than one selected from nitrate, fluoride, phosphate, sulfate, or sulfide. The molar ratio of D at the grain boundary and the surface is 10%-70%. The morphology and ratio of Li and D at the grain boundary and surface can be controlled by controlling precipitation parameters, heat treatment, and calcination temperature, time, and atmosphere of the product.

Further, the roasting temperature in step S1 is 600-1000°C, preferably 700-900°C; and the roasting time is 1-24 h, preferably 3-15 h.

Further, the heat treatment temperature in step S2 is 200-750°C, preferably 400-600°C; and the heat treatment time is 1-24 h, preferably 3-15 h; the drying temperature is 50-200°C, and the drying time is 1-24 h.

Further, the calcination temperature in step S2 is 700-1100°C, preferably 800-950°C; and the calcination time is 1-24 h, preferably 3-15 h.

According to a fourth aspect of the present invention, provided is use of the solid electrolyte of lithium-lanthanum-zirconium composite oxide which is doped at surface and at grain boundary according to the first aspect of the present invention in all-solid lithium metal or lithium ion batteries, semi-solid lithium ion batteries, lithium air batteries.

In summary, the present invention provides a solid electrolyte of lithium-lanthanum-zirconium composite oxide which is doped at surface and at grain boundary, a preparation method therefor, and an application thereof. Part of doping elements are step-doped at the grain boundary and the surface of the lithium-lanthanum-zirconium composite oxide solid electrolyte to improve the distribution state of the doping elements at the grain boundaries, reduce the number of grain boundaries, lower the grain boundary resistance of the lithium-lanthanum-zirconium composite oxide, and improve the ionic conductivity of the solid electrolyte of lithium-lanthanum-zirconium composite oxide. Compared with the element doping by ball milling, the grain boundary and surface doping do not destroy the structure, morphology, grains, and particles of the lithium-lanthanum-zirconium composite oxide, and also do not generate phase separation and surface defects, and the doped elements are more uniformly distributed, whereas it is difficult for ball milling method of dopant elements to enter into the grain boundaries of the particles. The technical solution of the present invention provides a universal method of grain boundary and surface doping, which realizes efficient and low-cost reduction of the grain boundary resistance of the lithium-lanthanum-zirconium composite oxide, thereby enhancing the conductivity of ions, and can satisfy the demand for doping elements in different solid-state electrolytes.

### BRIEF DESCRIPTION OF THE DRAWINGS

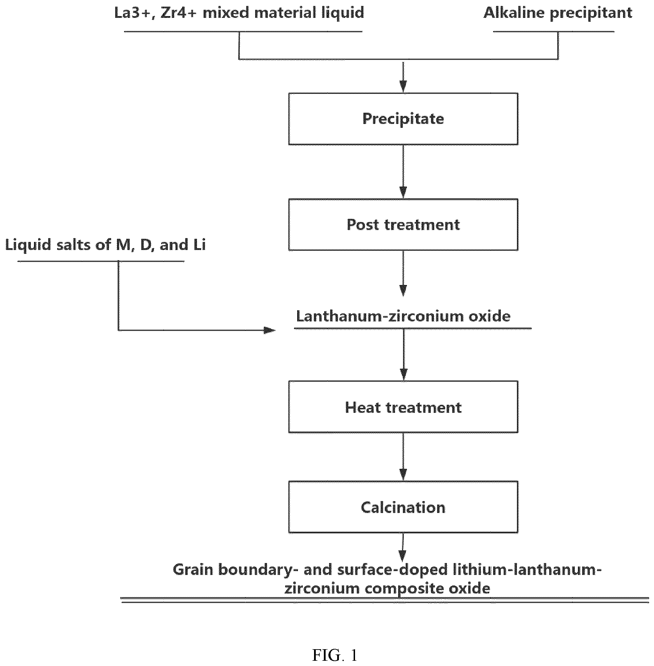

FIG. 1 is a flow chart of a preparation method for a solid electrolyte of lithium-lanthanum-zirconium composite oxide which is doped at surface and at grain boundary according to the present invention.

### DETAILED DESCRIPTION OF THE INVENTION

In order to make the purpose, technical solution, and advantages of the present invention clearer, the following is a detailed explanation of the present invention, combined with specific embodiments and referring to the accompanying drawings. It is to be understood that this description is made only by way of example and not as a limitation on the scope of the present invention. Further, in the following description, descriptions of publicly known structures and techniques are omitted to avoid unnecessarily confusing the concepts of the present invention.

In a first aspect of the present invention, provided is a solid electrolyte of lithium-lanthanum-zirconium composite oxide which is doped at surface and at grain boundary. The chemical formula of the solid electrolyte is Li₇₋ₓLa_{3-y}Zr_{2-z}M_{α}O₁₂-_{β}D_{δ}; wherein M includes one or more cationic doping elements and D includes one or more anionic doping elements; and 0 ≤ x ≤ 3, 0 ≤ y ≤ 1.5, 0 ≤ z ≤ 1, 0 <α <3, 0 ≤ β ≤ 1.5, and 0 ≤ δ ≤ 1. At the grain boundary and the surface, the solid electrolyte contains an oxide of Li and M, or an oxide of Li and M with one or more selected from fluoride, sulfide, nitrogen-containing compound, phosphate, and complex thereof formed from Li, M, and D, effectively reducing the grain boundary resistance of the lithium-lanthanum-zirconium composite oxide, thereby effectively improving the ionic conductivity thereof.

The doping element M may include one or a combination of more than one selected from cations of Na, K, Rb, Cs, Mg, Ca, Sr, Ba, Ti, V, Cr, Mn, Fe, Co, Ni, Cu, Zn, B, Al, Ga, In, Si, Ge, Sn, Sb, Bi, Se, Te, Nb, Mo, Hf, Ta, W, and rare earth elements other than La; preferably, the doping element M includes one or a combination of more than one selected from cations of Ti, V, Mn, Fe, Co, Ni, Cu, Zn, Al, Ga, In, Ge, Sn, Sb, Te, Nb, Mo, Ta, Ce, Pr, Nd, Sm, Eu, Gd, Yb, Sc, and Y; further preferably, the doping element M includes one or a combination of more than one selected from cations of Mn, Fe, Co, Ni, Al, Ga, Nb, Ta, Ce, Pr, Nd, Sm, Gd, Yb, and Y.

The doping element D may include one or a combination of more than one of the anions N, F, P, and S.

The molar content of the doping element M is less than or equal to 12% of the molar amount of the solid electrolyte by mole; the molar content of the doping element D is less than or equal to 5% of the molar amount of the solid electrolyte.

Further, Li and M, or Li, M, and D exist in a form including one or more selected from an oxide, fluoride, sulfide, nitrogen-containing compound, phosphate, and complex thereof at the grain boundary and the surface of the solid electrolyte.

Further, the lithium-lanthanum-zirconium composite oxide includes a garnet-type structure.

According to a second aspect of the present invention, provided is a preparation method for the solid electrolyte of lithium-lanthanum-zirconium composite oxide which is doped at surface and at grain boundary according to the first aspect of the present invention. The flowchart of the preparation method is shown in FIG. 1. The method includes a co-precipitation method and a grain boundary doping method, the method including the steps of:
S1, mixing aqueous solutions of lanthanum and zirconium compounds in a desired stoichiometric ratio to obtain a mixed material liquid; adding the mixed material liquid and an alkaline substance into a reactor for a precipitation reaction; performing suction filtration, washing, drying, and roasting on the obtained precipitate to obtain a lanthanum-zirconium oxide, in this step S1, impurity ions in the precipitate are removed by washing; and
S2, mixing the lanthanum-zirconium oxide with liquid salts of doping elements M and Li under a stirring condition in one or more steps, drying and then performing once or twice heat treatments, and then performing once or twice heat calcinations to obtain the solid electrolyte of lithium-lanthanum-zirconium composite oxide which is doped at surface and at grain boundary.

In a third aspect of the present invention, provided is a preparation method for the solid electrolyte of lithium-lanthanum-zirconium composite oxide which is doped at surface and at grain boundary according to the first aspect of the present invention, which may employ the following steps:
S1, mixing aqueous solutions of lanthanum and zirconium, and M or a part of M compound in a desired stoichiometric ratio to obtain a mixed material liquid; adding the mixed material liquid and an alkaline substance into a reactor for a precipitation reaction; performing suction filtration, washing, drying, and roasting on the obtained precipitate to obtain an M-containing lanthanum-zirconium oxide; and
S2, mixing the M-containing lanthanum-zirconium oxide with a liquid salt of Li or a mixed liquid salt of the remaining doping element M and Li under a stirring condition in one or more steps, drying and then performing once or twice heat treatments, and then performing once or twice heat calcinations to obtain the solid electrolyte of lithium-lanthanum-zirconium composite oxide which is doped at surface and at grain boundary.

In the preparation method provided in the above second and third aspects, all or part of Li may be added to the M-containing lanthanum-zirconium oxide in the form of solid salt.

In the above-mentioned preparation methods, step S1 mainly involves a co-precipitation method, and step S2 mainly involves to a grain boundary doping method. Lithium-lanthanum-zirconium composite oxide solid electrolyte is prepared by the co-precipitation method and the grain boundary doping method, so that the doping element is located at the grain boundaries and surfaces of the lithium-lanthanum-zirconium composite oxide solid electrolyte, improving the distribution state of the doping elements at the grain boundary, reducing the number of grain boundaries, reducing the grain boundary resistance of the lithium-lanthanum-zirconium composite oxide, and improving the ion conductivity of the lithium-lanthanum-zirconium composite oxide solid electrolyte. This method is versatile and can meet the requirements of different solid electrolytes for doping elements.

The zirconium source in the mixed material liquid in step S1 includes one or a combination of more than one of zirconium oxychloride, zirconium oxynitrate, zirconium sulfate, zirconium acetate, and zirconium citrate; the lanthanum source includes one or a combination of more than one of lanthanum chloride, lanthanum nitrate, lanthanum sulfate, lanthanum acetate, and lanthanum citrate. The alkaline substance includes magnesium bicarbonate, urea, and at least one selected from hydroxide, carbonate, or bicarbonate containing at least one selected from ammonium, sodium, or potassium, preferably including at least one selected from sodium hydroxide, urea, aqueous ammonia, and ammonium bicarbonate.

In step S1, adding the mixed material liquid and the alkaline substance into the reactor for the precipitation reaction, the pH during the precipitation process is controlled in the range of 4.5-14, preferably 5-10; the endpoint pH of the precipitation is controlled at 8-13, preferably 9-11; the temperature is controlled at 0-120°C, preferably 10-80°C.

The liquid salt of the doping element M or Li includes one or a combination of more than one selected from molten salt or aqueous solution of nitrate, acetate, sulfate, citrate, and an amino acid salt .

Doping element D is added in one or more of the steps S 1 and S2; the doping element D is derived from one or a combination of more than one of nitrate, fluoride, phosphate, sulfate, and sulfide.

The roasting temperature in step S 1 is 600-1000°C, preferably 700-900°C; and the roasting time is 1-24 h, preferably 3-15 h.

The heat treatment temperature in step S2 is 200-750°C, preferably 400-600°C; and the heat treatment time is 1-24 h, preferably 3-15 h. The drying temperature is 50-200°C, and the drying time is 1-24 h. The calcination temperature is 700-1100°C, preferably 800-950°C. The calcination time is 1-24 h, preferably 3-15 h. The morphology and ratio of Li and M at the grain boundary and surface can be controlled by controlling precipitation parameters, heat treatment, and calcination temperature, time, and atmosphere of the product. In order to meet the special requirements of different applications for different applications, it is necessary to adjust or change the type of doping elements and the microstructure of the electrolyte, so it is necessary to adopt different heat treatment systems, such as stepwise heat treatment, so that more doping elements enter the grain boundaries and surfaces more uniformly and stably, and water washing, water quenching and other treatments can also be performed from the two heat treatments. The lithium-lanthanum-zirconium composite oxide obtained above may also be subjected to two times of calcination so that the particle size and dispersibility thereof can be effectively controlled. After the calcination, ball milling, and surface treatment can be performed to avoid secondary sintering agglomeration.

In a fourth aspect of the present invention, provided is use of the lithium-lanthanum-zirconium composite oxide solid electrolyte according to the first aspect of the present invention in the fields such as all-solid lithium metal or lithium ion batteries, semi-solid lithium ion batteries, lithium air batteries. The lithium-lanthanum-zirconium composite oxide solid electrolyte of the embodiments of the present invention can be used in fields such as solid lithium metal or lithium ion batteries, semi-solid lithium ion batteries, lithium air batteries, etc. resulting in higher energy density and better safety performance.

The solid electrolyte of lithium-lanthanum-zirconium composite oxide which is doped at surface and at grain boundary powder can be prepared into a ceramic by a casting method, a thermal method, etc. It can also be mixed with a polymer, or structurally designed to prepare a composite solid electrolyte with a layered structure that matches the electrode material better.

The present invention is further described below by way of specific examples.

### Comparative Example 1

According to the stoichiometric ratio, La(NO₃)₃, ZrO(NO₃)₂, and Mn(NO₃)₂ were prepared into a mixed solution with a total cation concentration of 1.5 M with water. Under a stirring condition, the mixed material liquid and 3.0 M aqueous ammonia solution were added to a reactor at an even speed. The pH of the precipitation process was controlled to be 7 ± 0.2, the endpoint pH was 11, and the temperature was controlled to be 50°C for the precipitation reaction. The precipitate obtained was filtered, washed, and dried, and the dried product was roasted at 800°C for 9 h to obtain a lanthanum-zirconium-manganese oxide. Li₂CO₃ was mixed with the lanthanum-zirconium-manganese oxide evenly through ball milling and calcined at 900°C for 9 h to obtain a lithium-lanthanum-zirconium composite oxide solid electrolyte doped with Mn in the bulk phase, Li₇La₃Zr_{1.8}Mn_{0.2}O₁₂. The ionic conductivity was measured to be 1.89 × 10⁻⁴ S/cm (25°C).

### Comparative Example 2

According to the stoichiometric ratio, La(NO₃)₃, and ZrO(NO₃)₂ were prepared into a mixed solution with a total cation concentration of 1.5 M with water. Under a stirring condition, the mixed material liquid and 3.0 M aqueous ammonia solution were added to a reactor at an even speed. The pH of the precipitation process was controlled to be 7 ± 0.2, the endpoint pH was 11, and the temperature was controlled to be 50°C for the precipitation reaction. The precipitate obtained was filtered, washed, and dried, and the dried product was roasted at 800°C for 9 h to obtain a lanthanum-zirconium oxide. MnO₂ and Li₂CO₃ were mixed with the lanthanum-zirconium oxide evenly through ball milling and calcined at 900°C for 9 h to obtain a lithium-lanthanum-zirconium composite oxide solid electrolyte doped with Mn at the bulk phase, Li₇La₃Zr_{1.8}Mn_{0.2}O₁₂. The ionic conductivity was measured to be 1.56 × 10⁻⁴ S/cm (25°C).

### Example 1

According to the stoichiometric ratio, La(NO₃)₃ and ZrO(NO₃)₂ were prepared into a mixed solution with a total cation concentration of 1.5 M with water. Under a stirring condition, the mixed material liquid and 3.0 M aqueous ammonia solution were added to a reactor at an even speed. The pH of the precipitation process was controlled to be 7 ± 0.2, the endpoint pH was 11, and the temperature was controlled to be 50°C for the precipitation reaction. The precipitate obtained was filtered, washed, and dried, and the dried product was roasted at 800°C for 9 h to obtain a lanthanum-zirconium oxide. The lanthanum-zirconium oxide was mixed with Mn(NO₃)₂ and LiNO₃ liquid salts in the stoichiometric ratio of the doped Mn and Li. The mixture was dried at 100°C for 12 h, then subjected to heat treatment at 450°C for 10 h, and finally calcined at 900°C for 9 h to obtain a lithium-lanthanum-zirconium composite oxide solid electrolyte doped with the oxide of Mn and Li at the grain boundary and the surface, Li₇La₃Zr_{1.8}Mn_{0.2}O₁₂. Its ionic conductivity was measured to be 6.03 × 10⁻⁴ S/cm (25°C).

### Example 2

According to the stoichiometric ratio, La₂(SO₄)₃ and Zr(SO₄)₂ were prepared into a mixed solution with a total cation concentration of 0.5 M. Under a stirring condition, the mixed material liquid and 3.0 M aqueous ammonia solution were added to a reactor at an even speed. The pH of the precipitation process was controlled to be 9 ± 0.2, the endpoint pH was 10, and the temperature was controlled to be 50°C for the precipitation reaction. The precipitate obtained was filtered, washed, and dried, and the dried product was roasted at 850°C for 8.5 h to obtain a lanthanum-zirconium oxide. The lanthanum-zirconium oxide was mixed with Al(NO₃)₃ and LiNO₃ liquid salts in the stoichiometric ratio of the doped Al and Li. The mixture was dried at 100°C for 12 h, then subjected to heat treatment at 450°C for 12 h, and finally calcined at 850°C for 10 h to obtain a lithium-lanthanum-zirconium composite oxide solid electrolyte doped with the oxide and sulfide of Al and Li at the grain boundary and the surface, Li_{6.25}La₃Zr₂Al_{0.25}O_{11.4}S_{0.6}. Its ionic conductivity was measured to be 7.01 × 10⁻⁴ S/cm (25°C).

### Example 3

According to the stoichiometric ratio, La(NO₃)₃ and ZrO(NO₃)₂ were prepared into a mixed solution with a total cation concentration of 1.5 M. Under a stirring condition, the mixed material liquid and 3.0 M aqueous ammonia solution were added to a reactor at an even speed. The pH of the precipitation process was 5-9, the endpoint pH was 11, and the temperature was controlled to be 50°C for the precipitation reaction. The precipitate obtained was filtered, washed, and dried, and the dried product was roasted at 600°C for 48 h to obtain a lanthanum-zirconium oxide. The lanthanum-zirconium oxide was mixed with Fe(NO₃)₃ and LiNO₃ liquid salts in the stoichiometric ratio of the doped Fe and Li. The mixture was dried at 100°C for 12 h, then subjected to heat treatment at 200°C for 12 h, and finally calcined at 860°C for 9.5 h to obtain a lithium-lanthanum-zirconium composite oxide solid electrolyte doped with the oxide of Li and Fe at the grain boundary and the surface, Li_{6.7}La₃Zr₂Fe_{0.1}O₁₂. Its ionic conductivity was measured to be 4.25 × 10⁻⁴ S/cm (25°C).

### Example 4

According to the stoichiometric ratio, La(NO₃)₃ and ZrO(NO₃)₂ were prepared into a mixed solution with a total cation concentration of 1.0 M. Under a stirring condition, the mixed material liquid and 3.0 M aqueous ammonia solution were added to a reactor at an even speed. The pH of the precipitation process was controlled to be 8 ± 0.2, the endpoint pH was 9.5, and the temperature was controlled to be 50°C for the precipitation reaction. The precipitate obtained was filtered, washed, and dried, and the dried product was roasted at 800°C for 9 h to obtain a lanthanum-zirconium oxide. The lanthanum-zirconium oxide was mixed with Co(NO₃)₂ and LiNO₃ liquid salts in the stoichiometric ratio of the doped Co and Li. The mixture was dried at 80°C for 18 h, then subjected to heat treatment at 550°C for 8 h, then calcined at 800°C for 8 h, and finally calcined at 950°C for 7 h to obtain a lithium-lanthanum-zirconium composite oxide solid electrolyte doped with the oxide of Li and Co at the grain boundary and the surface, Li₇La₃Zr_{1.5}Co_{0.5}O₁₂. Its ionic conductivity was measured to be 6.86 × 10⁻⁴ S/cm (25°C).

### Example 5

According to the stoichiometric ratio, La(NO₃)₃ and ZrO(NO₃)₂ were prepared into a mixed solution with a total cation concentration of 1.0 M. Under a stirring condition, the mixed material liquid and 4.0 M aqueous ammonia solution were added to a reactor at an even speed. The pH of the precipitation process was 9-12, the endpoint pH of the precipitation was 9, and the temperature was controlled to be 50°C for the precipitation reaction. The precipitate obtained was filtered, washed, and dried, and the dried product was roasted at 900°C for 8 h to obtain a lanthanum-zirconium oxide. The lanthanum-zirconium oxide was mixed with Ni(CH₃COO)₂ and CH₃COOLi liquid salts of Ni and Li. The mixture was dried at 100°C for 12 h, then subjected to heat treatment at 680°C for 6.5 h, and finally calcined at 900°C for 9 h to obtain a lithium-lanthanum-zirconium composite oxide solid electrolyte doped with the oxide of Li and Ni at the grain boundary and the surface, Li₇La₃Zr_{1.8}Ni_{0.4}O₁₂. Its ionic conductivity was measured to be 5.36 × 10⁻⁴ S/cm (25°C).

### Example 6

According to the stoichiometric ratio, La(CH₃COO)₃ and Zr(CH₃COO)₄ were prepared into a mixed solution with a total cation concentration of 0.5 M. Under a stirring condition, the mixed material liquid and 3.5 M aqueous ammonia solution were added to a reactor at an even speed. The pH of the precipitation process was controlled to be 8 ± 0.2, the endpoint pH was 11, and the temperature was controlled to be 50°C for the precipitation reaction. The precipitate obtained was filtered, washed, and dried, and the dried product was roasted at 800°C for 9 h to obtain a lanthanum-zirconium oxide. The lanthanum-zirconium oxide was mixed with Ga(NO₃)₃ and LiNO₃ liquid salts in the stoichiometric ratio of the doped Ga and Li. The mixture was dried at 100°C for 12 h, then subjected to heat treatment at 600°C for 6 h, and finally calcined at 920°C for 8.5 h to obtain a lithium-lanthanum-zirconium composite oxide solid electrolyte doped with the oxide of Li and Ga at the grain boundary and the surface, Li_{6.4}La₃Zr₂Ga_{0.2}O₁₂. Its ionic conductivity was measured to be 1.14 × 10⁻³ S/cm (25°C).

### Example 7

According to the stoichiometric ratio, La(NO₃)₃ and ZrO(NO₃)₂ were prepared into a mixed solution with a total cation concentration of 1.5 M. Under a stirring condition, the mixed material liquid and 3 M sodium hydroxide solution were added to a reactor at an even speed. The pH of the precipitation process was 10-14, the endpoint pH was 10, and the temperature was controlled to be 60°C for the precipitation reaction. The precipitate obtained was filtered, washed, and dried, and the dried product was roasted at 750°C for 10 h to obtain a lanthanum-zirconium oxide. The lanthanum-zirconium oxide was mixed with NbO(NO₃)₃, LiNO₃, and NH₄F liquid salts stepwise in the stoichiometric ratio of the doped Ni and Li. The mixture was dried at 100°C for 12 h, then subjected to heat treatment at 600°C for 6 h, and finally calcined at 940°C for 8 h to obtain a lithium-lanthanum-zirconium composite oxide solid electrolyte doped with the oxide and fluoride of Li and Nb at the grain boundary and the surface, Li_{6.3}La₃Zr_{1.4}Nb_{0.7}O_{11.75}F_{0.5}. Its ionic conductivity was measured to be 9.65 × 10⁻⁴ S/cm (25°C).

### Example 8

According to the stoichiometric ratio, La(NO₃)₃ and ZrO(NO₃)₂ were prepared into a mixed solution with a total cation concentration of 1.5 M. Under a stirring condition, the mixed material liquid and 3 M sodium hydroxide solution were added to a reactor at an even speed. The pH of the precipitation process was controlled to be 8 ± 0.2, the endpoint pH was 9.5, and the temperature was controlled to be 50°C for the precipitation reaction. The precipitate obtained was filtered, washed, and dried, and the dried product was roasted at 1000°C for 1 h to obtain a lanthanum-zirconium oxide. The lanthanum-zirconium oxide was mixed with Ce(NO₃)₃, LiNO₃, and (NH₄)₃PO₄ liquid salts stepwise in the stoichiometric ratio of the doped Ce and Li. The mixture was dried at 100°C for 5 h, then subjected to heat treatment at 750°C for 1 h, and finally calcined at 900°C for 9 h to obtain a lithium-lanthanum-zirconium composite oxide solid electrolyte doped with the oxide and phosphate of Li and Ce at the grain boundary and the surface, Li_{6.8}La_{2.8}Zr₂Ce_{0.2}O_{10.5}P. Its ionic conductivity was measured to be 5.08 × 10⁻⁴ S/cm (25°C).

### Example 9

According to the stoichiometric ratio, La(NO₃)₃ and ZrO(NO₃)₂ were prepared into a mixed solution with a total cation concentration of 1.5 M. Under a stirring condition, the mixed material liquid and 3.05 M sodium hydroxide solution were added to a reactor at an even speed. The pH of the precipitation process was controlled to be 8 ± 0.2, the endpoint pH of the precipitation was 13, and the temperature was controlled to be 0°C for the precipitation reaction. The precipitate obtained was filtered, washed, and dried, and the dried product was roasted at 750°C for 10 h to obtain a lanthanum-zirconium oxide. The lanthanum-zirconium oxide was mixed with Pr(NO₃)₃ · 6H₂O and LiNO₃ liquid salts in the stoichiometric ratio of doped Pr and Li. The mixture was dried at 50°C for 24 h, then subjected to heat treatment at 200°C for 12 h, and another heat treatment at 500°C for 8.5 h, and finally calcined at 900°C for 9 h to obtain a lithium-lanthanum-zirconium composite oxide solid electrolyte doped with the oxide of Li and Pr at the grain boundary and the surface, Li₇La_{2.6}Zr₂Pr_{0.4}O₁₂. Its ionic conductivity was measured to be 5.56 × 10⁻⁴ S/cm (25°C).

### Example 10

According to the stoichiometric ratio, La(NO₃)₃ and ZrO(NO₃)₂ were prepared into a mixed solution with a total cation concentration of 1.5 M. Under a stirring condition, the mixed material liquid and 3 M sodium hydroxide solution were added to a reactor at an even speed. The pH of the precipitation process was controlled to be 9 ± 0.2, the endpoint pH of the precipitation was 10, and the temperature was controlled to be 80°C for the precipitation reaction. The precipitate obtained was filtered, washed, and dried, and the dried product was roasted at 850°C for 8.5 h to obtain a lanthanum-zirconium oxide. The lanthanum-zirconium oxide was mixed with Nd(NO₃)₃ and LiNO₃ liquid salts in the stoichiometric ratio of the doped Nd and Li. The mixture was dried at 100°C for 12 h, then subjected to heat treatment at 530°C for 8 h, and finally calcined at 900°C for 9 h to obtain a lithium-lanthanum-zirconium composite oxide solid electrolyte doped with the oxide of Li and Ni at the grain boundary and the surface, Li₇La_{2.2}Zr₂Nd_{0.8}O₁₂. Its ionic conductivity was measured to be 6.59 × 10⁻⁴ S/cm (25°C).

### Example 11

According to the stoichiometric ratio, La(NO₃)₃ and ZrO(NO₃)₂ were prepared into a mixed solution with a total cation concentration of 1.5 M. Under a stirring condition, the mixed material liquid and 3 M sodium hydroxide solution were added to a reactor at an even speed. The pH of the precipitation process was controlled to be 9 ± 0.2, the endpoint pH of the precipitation was 10, and the temperature was controlled to be 10°C for the precipitation reaction. The precipitate obtained was filtered, washed, and dried, and the dried product was roasted at 650°C for 3 h to obtain a lanthanum-zirconium oxide. The lanthanum-zirconium oxide was mixed with Sm(NO₃)₃·6H₂O and LiNO₃ liquid salts in the stoichiometric ratio of the doped Sm and Li. The mixture was dried at 100°C for 6 h, then subjected to heat treatment at 500°C for 8.5 h, then calcined at 800°C for 8 h, and calcined again at 950°C for 4 h to obtain a lithium-lanthanum-zirconium composite oxide solid electrolyte doped with the oxide of Li and Sm at the grain boundary and the surface, Li₇La_{2.5}Zr₂Sm_{0.5}O₁₂. Its ionic conductivity was measured to be 5.03 × 10⁻⁴ S/cm (25°C).

### Example 12

According to the stoichiometric ratio, La(NO₃)₃ and ZrO(NO₃)₂ were prepared into a mixed solution with a total cation concentration of 1.5 M. Under a stirring condition, the mixed material liquid and 3 M sodium hydroxide solution were added to a reactor at an even speed. The pH of the precipitation process was 6-10, the endpoint pH of the precipitation was 11, and the temperature was controlled to be 50°C for the precipitation reaction. The precipitate obtained was filtered, washed, and dried, and the dried product was roasted at 750°C for 10 h to obtain a lanthanum-zirconium oxide. The lanthanum-zirconium oxide was mixed with Gd(NO₃)₃·6H₂O and LiNO₃ liquid salts in the stoichiometric ratio of the doped Gd and Li. The mixture was dried at 100°C for 12 h, then subjected to heat treatment at 460°C for 9 h, and calcined at 800°C for 15 h to obtain a lithium-lanthanum-zirconium composite oxide solid electrolyte doped with the oxide and nitrogen-containing compound of Li and Gd at the grain boundary and the surface, Li₇La_{2.5}Zr₂Gd_{0.5}O_{11.91}N_{0.06}. Its ionic conductivity was measured to be 8.42 × 10⁻⁴ S/cm (25°C).

### Example 13

According to the stoichiometric ratio, La(NO₃)₃ and ZrO(NO₃)₂ were prepared into a mixed solution with a total cation concentration of 1.0 M. Under a stirring condition, the mixed material liquid and 3 M urea solution were added to a reactor. The temperature of the reaction was controlled to be 120°C to carry out the precipitation reaction. The precipitate obtained was filtered, washed, and dried, and the dried product was roasted at 850°C for 8.5 h to obtain a lanthanum-zirconium oxide. The lanthanum-zirconium oxide was mixed with Yb(NO₃)₃ and LiNO₃ liquid salts in the stoichiometric ratio of the doped Yb and Li. The mixture was dried at 100°C for 12 h, then subjected to heat treatment at 500°C for 8.5 h, and finally calcined at 800°C for 15 h to obtain a lithium-lanthanum-zirconium composite oxide solid electrolyte doped with the oxide of Li and Yb at the grain boundary and the surface, Li₇La₂Zr₂YbO₁₂. Its ionic conductivity was measured to be 6.89 × 10⁻⁴ S/cm (25°C).

### Example 14

According to the stoichiometric ratio, La(NO₃)₃ and ZrO(NO₃)₂ were prepared into a mixed solution with a total cation concentration of 1.5 M. Under a stirring condition, the mixed material liquid and 3 M aqueous ammonia solution were added to a reactor. The pH of the precipitation process was controlled to be 8 ± 0.2, the endpoint pH of the precipitation was 10, and the temperature was controlled to be 40°C for the precipitation reaction. The precipitate obtained was filtered, washed, and dried, and the dried product was roasted at 800°C for 9 h to obtain a lanthanum-zirconium oxide. The lanthanum-zirconium oxide was mixed with TaO(NO₃)₃ and LiNO₃ liquid salts in the stoichiometric ratio of the doped Ta and Li. The mixture was dried at 100°C for 12 h, then subjected to heat treatment at 550°C for 8 h, and finally calcined at 700°C for 24 h to obtain a lithium-lanthanum-zirconium composite oxide solid electrolyte doped with the oxide of Li and Ta at the grain boundary and the surface, Li_{6.5}La₃Zr_{1.5}Ta_{0.5}O₁₂. Its ionic conductivity was measured to be 5.48 × 10⁻⁴ S/cm (25°C).

### Example 15

According to the stoichiometric ratio, La(NO₃)₃ and ZrO(NO₃)₂ were prepared into a mixed solution with a total cation concentration of 1.0 M. Under a stirring condition, the mixed material liquid and 3 M aqueous ammonia solution were added to a reactor. The pH of the precipitation process was controlled to be 7 ± 0.2, the endpoint pH of the precipitation was 9.5, and the temperature was controlled to be 40°C for the precipitation reaction. The precipitate obtained was filtered, washed, and dried, and the dried product was roasted at 800°C for 9 h to obtain a lanthanum-zirconium oxide. The lanthanum-zirconium oxide was mixed with Y(NO₃)₃·6H₂O and LiNO₃ liquid salts in the stoichiometric ratio of the doped Y and Li. The mixture was dried at 150°C for 8 h, then subjected to heat treatment at 530°C for 8 h, and finally calcined at 870°C for 9.5 h to obtain a lithium-lanthanum-zirconium composite oxide solid electrolyte doped with the oxide of Li and Y at the grain boundary and the surface, Li₇La_{1.5}Zr₂Y_{1.5}O₁₂. Its ionic conductivity was measured to be 9.12 × 10⁻⁴ S/cm (25°C).

### Example 16

According to the stoichiometric ratio, La(NO₃)₃ and ZrO(NO₃)₂ were prepared into a mixed solution with a total cation concentration of 1.5 M. Under a stirring condition, the mixed material liquid and 3 M aqueous ammonia solution were added to a reactor at an even speed. The pH of the precipitation process was controlled to be 8 ± 0.2, the endpoint pH of the precipitation was 10, and the temperature was controlled to be 40°C for the precipitation reaction. The precipitate obtained was filtered, washed, and dried, and the dried product was roasted at 800°C for 9 h to obtain a lanthanum-zirconium oxide. The lanthanum-zirconium oxide was mixed with TaO(NO₃)₃ and LiNO₃ liquid salts in the stoichiometric ratio of the doped Ta and Li. The mixture was dried at 100°C for 12 h, then subjected to heat treatment at 550°C for 8 h, and finally calcined at 800°C for 15 h to obtain a lithium-lanthanum-zirconium composite oxide solid electrolyte doped with the oxide of Li and Ta at the grain boundary and the surface, Li_{6.4}La₃Zr_{1.6}Ta_{0.6}O₁₂. Its ionic conductivity was measured to be 7.75 × 10⁻⁴ S/cm (25°C).

### Example 17

According to the stoichiometric ratio, La(NO₃)₃ and ZrO(NO₃)₂ were prepared into a mixed solution with a total cation concentration of 1.5 M. Under a stirring condition, the mixed material liquid and 3 M aqueous ammonia solution were added to a reactor at an even speed. The pH of the precipitation process was controlled to be 10 ± 0.2, the endpoint pH of the precipitation was 10.5, and the temperature was controlled to be 50°C for the precipitation reaction. The precipitate obtained was filtered, washed, and dried, and the dried product was roasted at 700°C for 15 h to obtain a lanthanum-zirconium oxide. The lanthanum-zirconium oxide was mixed with Cu(NO₃)₂ and LiNO₃ liquid salts in the stoichiometric ratio of the doped Cu and Li. The mixture was dried at 100°C for 12 h, then subjected to heat treatment at 400°C for 15 h, and finally calcined at 930°C for 8.5 h to obtain a lithium-lanthanum-zirconium composite oxide solid electrolyte doped with the oxide of Li and Cu at the grain boundary and the surface, Li₇La₃Zr_{1.2}Cu_{1.6}O₁₂. Its ionic conductivity was measured to be 6.83 × 10⁻⁴ S/cm (25°C).

### Example 18

According to the stoichiometric ratio, La(NO₃)₃ and ZrO(NO₃)₂ were prepared into a mixed solution with a total cation concentration of 1.5 M. Under a stirring condition, the mixed material liquid and 3 M aqueous ammonia solution were added to a reactor at an even speed. The pH of the precipitation process was controlled to be 8 ± 0.2, the endpoint pH of the precipitation was 10, and the temperature was controlled to be 40°C for the precipitation reaction. The precipitate obtained was filtered, washed, and dried, and the dried product was roasted at 800°C for 9 h to obtain a lanthanum-zirconium oxide. The lanthanum-zirconium oxide was mixed with TaO(NO₃)₃ and LiNO₃ liquid salts in the stoichiometric ratio of the doped Ta and Li. The mixture was dried at 100°C for 12 h, then subjected to heat treatment at 550°C for 9 h, and finally calcined at 950°C for 8 h to obtain a lithium-lanthanum-zirconium composite oxide solid electrolyte doped with the oxide of Li and Ta at the grain boundary and the surface, Li₆La₃ZrTaO₁₂. Its ionic conductivity was measured to be 8.35 × 10⁻⁴ S/cm (25°C).

### Example 19

According to the stoichiometric ratio, La(NO₃)₃ and ZrO(NO₃)₂ were prepared into a mixed solution with a total cation concentration of 0.5 M. Under a stirring condition, the mixed material liquid and 3 M aqueous ammonia solution were added to a reactor at an even speed. The pH of the precipitation process was controlled to be 4.5-9, the endpoint pH of the precipitation was 11, and the temperature was controlled to be 60°C for the precipitation reaction. The precipitate obtained was filtered, washed, and dried, and the dried product was roasted at 700°C for 15 h to obtain a lanthanum-zirconium oxide. The lanthanum-zirconium oxide was mixed with TaO(NO₃)₃, NbO(NO₃)₃, and LiNO₃ liquid salts in the stoichiometric ratio of the doped Ta, Nb, and Li. The mixture was dried at 120°C for 10 h, then subjected to heat treatment at 580°C for 7.5 h, and finally calcined at 900°C for 9 h to obtain a lithium-lanthanum-zirconium composite oxide solid electrolyte doped with the oxide of Li, Nb, and Ta at the grain boundary and the surface, Li_{6.6}La₃Zr_{1.6}Ta_{0.2}Nb_{0.2}O₁₂. Its ionic conductivity was measured to be 9.89 × 10⁻⁴ S/cm (25°C).

### Example 20

According to the stoichiometric ratio, La(NO₃)₃ and ZrO(NO₃)₂ were prepared into a mixed solution of La³⁺ and Zr⁴⁺ with a total cation concentration of 1.5 M. Under a stirring condition, the mixed material liquid and 3 M aqueous ammonia solution were added to a reactor. The pH of the precipitation process was controlled to be 8 ± 0.2, the endpoint pH of the precipitation was 10, and the temperature was controlled to be 40°C for the precipitation reaction. The precipitate obtained was filtered, washed, and dried, and the dried product was roasted at 800°C for 9 h to obtain a lanthanum-zirconium oxide. The lanthanum-zirconium oxide was mixed with TaO(NO₃)₃ and LiNO₃ liquid salts in the stoichiometric ratio of the doped Ta and Li. The mixture was dried at 100°C for 12 h, then subjected to heat treatment at 550°C for 8 h, and finally calcined at 1100°C for 1 h to obtain a lithium-lanthanum-zirconium composite oxide solid electrolyte doped with the oxide of Li and Ta at the grain boundary and the surface, Li_{6.15}La₃Zr_{1.85}Ta_{0.85}O₁₂. Its ionic conductivity was measured to be 5.09 × 10⁻⁴ S/cm (25°C).

### Example 21

According to the stoichiometric ratio, La(NO₃)₃ and ZrO(NO₃)₂ were prepared into a mixed solution with a total cation concentration of 0.5 M. Under a stirring condition, the mixed material liquid and 4 M aqueous ammonia solution were added to a reactor at an even speed. The pH of the precipitation process was controlled to be 6 ± 0.2, the endpoint pH of the precipitation was 10, and the temperature was controlled to be 40°C for the precipitation reaction. The precipitate obtained was filtered, washed, and dried, and the dried product was roasted at 850°C for 5 h to obtain a lanthanum-zirconium oxide. The lanthanum-zirconium oxide was mixed with Ga(NO₃)₃, Al(NO₃)₃, and LiNO₃ liquid salts in the stoichiometric ratio of the doped Ga, Al, and Li. The mixture was dried at 100°C for 12 h, then subjected to heat treatment at 600°C for 6 h, and finally calcined at 850°C for 10 h to obtain a lithium-lanthanum-zirconium composite oxide solid electrolyte doped with the oxide of Li, Al, and Ga at the grain boundary and the surface, Li_{6.1}La₃Zr₂Al_{0.1}Ga_{0.2}O₁₂. Its ionic conductivity was measured to be 3.12 × 10⁻³ S/cm (25°C).

### Example 22

According to the stoichiometric ratio, La(NO₃)₃ and ZrO(NO₃)₂ were prepared into a mixed solution with a total cation concentration of 1.5 M. Under a stirring condition, the mixed material liquid and 3 M aqueous ammonia solution were added to a reactor at an even speed. The pH of the precipitation process was controlled to be 6 ± 0.2, the endpoint pH of the precipitation was 12, and the temperature was controlled to be 40°C for the precipitation reaction. The precipitate obtained was filtered, washed, and dried, and the dried product was roasted at 750°C for 10 h to obtain a lanthanum-zirconium oxide. The lanthanum-zirconium oxide was mixed with TaO(NO₃)₃, LiNO₃, and NH₄F liquid salts in the stoichiometric ratio of the doped Ta and Li. The mixture was dried at 100°C for 12 h, then subjected to heat treatment at 550°C for 8 h, and finally calcined at 830°C for 13 h to obtain a lithium-lanthanum-zirconium composite oxide solid electrolyte doped with the oxide and fluoride of Li and Ta at the grain boundary and the surface, Li_{6.5}La₃Zr_{1.5}Ta_{0.5}O_{11.75}F_{0.5}. Its ionic conductivity was measured to be 8.40 × 10⁻⁴ S/cm (25°C).

### Example 23

According to the stoichiometric ratio, La(NO₃)₃ and ZrO(NO₃)₂ were prepared into a mixed solution with a total cation concentration of 1.5 M. Under a stirring condition, the mixed material liquid and 3 M aqueous ammonia solution were added to a reactor at an even speed. The pH of the precipitation process was controlled to be 5 ± 0.2, the endpoint pH of the precipitation was 10, and the temperature was controlled to be 40°C for the precipitation reaction. The precipitate obtained was filtered, washed, and dried, and the dried product was roasted at 750°C for 10 h to obtain a lanthanum-zirconium oxide. The lanthanum-zirconium oxide was mixed with TaO(NO₃)₃, NbO(NO₃)₃, LiNO₃, and NH₄F liquid salts in the stoichiometric ratio of the doped Ta, Nb, and Li. The mixture was dried at 100°C for 12 h, then subjected to heat treatment at 500°C for 8.5 h, and finally calcined at 900°C for 9 h to obtain a lithium-lanthanum-zirconium composite oxide solid electrolyte doped with the oxide and fluoride of Li, Ta, and Nb at the grain boundary and the surface, Li_{6.6}La₃Zr_{1.6}Ta_{0.2}Nb_{0.2}O_{11.95}F_{0.1}. Its ionic conductivity was measured to be 1.32 × 10⁻³ S/cm (25°C).

### Example 24

According to the stoichiometric ratio, La(NO₃)₃ and ZrO(NO₃)₂ were prepared into a mixed solution with a total cation concentration of 1.5 M. Under a stirring condition, the mixed material liquid and 3 M aqueous ammonia solution were added to a reactor. The pH of the precipitation process was controlled to be 8 ± 0.2, the endpoint pH of the precipitation was 10, and the temperature was controlled to be 40°C for the precipitation reaction. The precipitate obtained was filtered, washed, and dried, and the dried product was roasted at 800°C for 9 h to obtain a lanthanum-zirconium oxide. The lanthanum-zirconium oxide was mixed with TaO(NO₃)₃ and LiNO₃ liquid salts in the stoichiometric ratio of the doped Ta and Li. The mixture was dried at 100°C for 12 h, then subjected to heat treatment at 550°C for 9 h, and finally calcined at 850°C for 11 h to obtain a lithium-lanthanum-zirconium composite oxide solid electrolyte doped with the oxide of Li and Ta at the grain boundary and the surface, Li_{6.2}La₃Zr_{1.8}Ta_{0.8}O₁₂. Its ionic conductivity was measured to be 8.89 × 10⁻⁴ S/cm (25°C).

### Example 25

According to the stoichiometric ratio, La(NO₃)₃ and ZrO(NO₃)₂ were prepared into a mixed solution with a total cation concentration of 1.0 M. Under a stirring condition, the mixed material liquid and 3 M mixed solution of ammonium bicarbonate and aqueous ammonia were added to a reactor. The pH of the precipitation process was controlled to be 8 ± 0.2, the endpoint pH of the precipitation was 10, and the temperature was controlled to be 40°C for the precipitation reaction. The precipitate obtained was filtered, washed, and dried, and the dried product was roasted at 850°C for 8.5 h to obtain a lanthanum-zirconium oxide. The lanthanum-zirconium oxide was mixed with Eu(NO₃)₂ and LiNO₃ liquid salts in the stoichiometric ratio of the doped Eu and Li. The mixture was dried at 100°C for 12 h, then subjected to heat treatment at 570°C for 7.5 h, and finally calcined at 820°C for 13 h to obtain a lithium-lanthanum-zirconium composite oxide solid electrolyte doped with the oxide of Li and Eu at the grain boundary and the surface, Li₇La₃Zr_{1.1}Eu_{1.8}O₁₂. Its ionic conductivity was measured to be 6.88 × 10⁻⁴ S/cm (25°C).

### Example 26

According to the stoichiometric ratio, La(NO₃)₃ and ZrO(NO₃)₂ were prepared into a mixed solution with a total cation concentration of 1.0 M. Under a stirring condition, the mixed material liquid and 3 M aqueous ammonia solution were added to a reactor. The pH of the precipitation process was controlled to be 9.5 ± 0.2, the endpoint pH of the precipitation was 10, and the temperature was controlled to be 45°C for the precipitation reaction. The precipitate obtained was filtered, washed, and dried, and the dried product was roasted at 800°C for 9 h to obtain a lanthanum-zirconium oxide. The lanthanum-zirconium oxide was mixed with Ti(NO₃)₄ and LiNO₃ liquid salts in the stoichiometric ratio of the doped Ti and Li. The mixture was dried at 100°C for 12 h, then subjected to heat treatment at 460°C for 9.5 h, and finally calcined at 860°C for 10.5 h to obtain a lithium-lanthanum-zirconium composite oxide solid electrolyte doped with the oxide of Li and Ti at the grain boundary and the surface, Li₇La₃Zr_{1.9}Ti_{0.1}O₁₂. Its ionic conductivity was measured to be 5.81 × 10⁻⁴ S/cm (25°C).

### Example 27

According to the stoichiometric ratio, La(NO₃)₃ and ZrO(NO₃)₂ were prepared into a mixed solution with a total cation concentration of 1.5 M. Under a stirring condition, the mixed material liquid and 3 M aqueous ammonia solution were added to a reactor at an even speed. The pH of the precipitation process was controlled to be 5.5-11, the endpoint pH of the precipitation was 12, and the temperature was controlled to be 40°C for the precipitation reaction. The precipitate obtained was filtered, washed, and dried, and the dried product was roasted at 800°C for 9 h to obtain a lanthanum-zirconium oxide. The lanthanum-zirconium oxide was mixed with Ca(NO₃)₂ and LiNO₃ liquid salts in the stoichiometric ratio of the doped Ca and Li. The mixture was dried at 100°C for 12 h, then subjected to heat treatment at 410°C for 13 h, and finally calcined at 840°C for 12 h to obtain a lithium-lanthanum-zirconium composite oxide solid electrolyte doped with the oxide of Li and Ca at the grain boundary and the surface, Li₇La_{1.8}Zr₂Ca_{1.8}O₁₂. Its ionic conductivity was measured to be 6.12 × 10⁻⁴ S/cm (25°C).

### Example 28

According to the stoichiometric ratio, La₂(SO₄)₃ and Zr(SO₄)₂ were prepared into a mixed solution with a total cation concentration of 0.5 M. Under a stirring condition, the mixed material liquid and 3 M aqueous ammonia solution were added to a reactor at an even speed. The pH of the precipitation process was controlled to be 7 ± 0.2, the endpoint pH of the precipitation was 11, and the temperature was controlled to be 40°C for the precipitation reaction. The precipitate obtained was filtered, washed, and dried, and the dried product was roasted at 850°C for 8.5 h to obtain a lanthanum-zirconium oxide. The lanthanum-zirconium oxide was mixed with Ga(NO₃)₃, Al(NO₃)₃, and LiNO₃ liquid salts in the stoichiometric ratio of the doped Ga, Al, and Li. The mixture was dried at 100°C for 12 h, then subjected to heat treatment at 600°C for 6 h, and then calcined at 850°C for 18 h to obtain a lithium-lanthanum-zirconium composite oxide solid electrolyte doped with the oxide and sulfide of Li, Al and Ga at the grain boundary and the surface, Li_{6.1}La₃Zr₂Al_{0.1}Ga_{0.2}O₁₁S. Its ionic conductivity was measured to be 4.32 × 10⁻³ S/cm (25°C).

### Example 29

According to the stoichiometric ratio, La(NO₃)₃ and ZrO(NO₃)₂ were prepared into a mixed solution with a total cation concentration of 1.0 M. Under a stirring condition, the mixed material liquid and 3 M aqueous ammonia solution were added to a reactor. The pH of the precipitation process was controlled to be 9.5 ± 0.2, the endpoint pH of the precipitation was 10, and the temperature was controlled to be 45°C for the precipitation reaction. The precipitate obtained was filtered, washed, and dried, and the dried product was roasted at 800°C for 9 h to obtain a lanthanum-zirconium oxide. The lanthanum-zirconium oxide was mixed with Ga(NO₃)₃, LiNO₃, and (NH₄)₃PO₄ liquid salts in the stoichiometric ratio of the doped Ga and Li. The mixture was dried at 100°C for 12 h, then subjected to heat treatment at 450°C for 12 h, and finally calcined at 800°C for 15 h to obtain a lithium-lanthanum-zirconium composite oxide solid electrolyte doped with the oxide and phosphate of Li and Ga at the grain boundary and the surface, Li₄La₃Zr₂GaO_{10.5}P. Its ionic conductivity was measured to be 9.91 × 10⁻⁴ S/cm (25°C).

### Example 30

According to the stoichiometric ratio, La(NO₃)₃ and ZrO(NO₃)₂ were prepared into a mixed solution with a total cation concentration of 1.5 M. Under a stirring condition, the mixed material liquid and 3 M aqueous ammonia solution were added to a reactor at an even speed. The pH of the precipitation process was controlled to be 8.5 ± 0.2, the endpoint pH of the precipitation was 12, and the temperature was controlled to be 40°C for the precipitation reaction. The precipitate obtained was filtered, washed, and dried, and the dried product was roasted at 750°C for 10 h to obtain a lanthanum-zirconium oxide. The lanthanum-zirconium oxide was mixed with Ga(NO₃)₃, TaO(NO₃)₃, Ba(NO₃)₂, and LiNO₃ liquid salts in the stoichiometric ratio of the doped Ga, Ba, Ta, and Li. The mixture was dried at 50°C for 24 h, then subjected to heat treatment at 480°C for 12 h, and finally calcined at 900°C for 9 h to obtain a lithium-lanthanum-zirconium composite oxide solid electrolyte doped with the oxide of Li, Ga, Ba, and Ta at the grain boundary and the surface, Li_{6.4}Ga_{0.1}La₃Zr_{1.55}Ta_{0.4}Ba_{0.05}O₁₂. Its ionic conductivity was measured to be 8.36 × 10⁻⁴ S/cm (25°C).

### Example 31

According to the stoichiometric ratio, La(NO₃)₃ and ZrO(NO₃)₂ were prepared into a mixed solution with a total cation concentration of 1.5 M. Under a stirring condition, the mixed material liquid and 3.05 M sodium hydroxide solution were added to a reactor at an even speed. The pH of the precipitation process was controlled to be 8 ± 0.2, the endpoint pH of the precipitation was 12, and the temperature was controlled to be 40°C for the precipitation reaction. The precipitate obtained was filtered, washed, and dried, and the dried product was roasted at 750°C for 10 h to obtain a lanthanum-zirconium oxide. The lanthanum-zirconium oxide was mixed with Al(NO₃), RbNO₃, and LiNO₃ liquid salts in the stoichiometric ratio of the doped Al, Rb, and Li. The mixture was dried at 50°C for 24 h, then subjected to heat treatment at 400°C for 15 h, and finally calcined at 900°C for 9 h to obtain a lithium-lanthanum-zirconium composite oxide solid electrolyte doped with the oxide of Li and Rb at the grain boundary and the surface, Li_{6.1}La_{2.1}Zr₂Al_{0.3}Rb_{2.7}O₁₂. Its ionic conductivity was measured to be 7.96 × 10⁻⁴ S/cm (25°C).

### Example 32

According to the stoichiometric ratio, La(NO₃)₃ and ZrO(NO₃)₂ were prepared into a mixed solution with a total cation concentration of 1.5 M. Under a stirring condition, the mixed material liquid and 3.05 M sodium hydroxide solution were added to a reactor at an even speed. The pH of the precipitation process was controlled to be 8.5 ± 0.2, the endpoint pH of the precipitation was 12, and the temperature was controlled to be 45°C for the precipitation reaction. The precipitate obtained was filtered, washed, and dried, and the dried product was roasted at 750°C for 10 h to obtain a lanthanum-zirconium oxide. The lanthanum-zirconium oxide was mixed with Ge(NO₃)₄ and LiNO₃ liquid salts in the stoichiometric ratio of the doped Ge and Li. The mixture was dried at 50°C for 24 h, then subjected to heat treatment at 400°C for 14 h and another heat treatment at 700°C for 16 h, finally calcined at 900°C for 9 h, and calcined again at 950°C for 8 h to obtain a lithium-lanthanum-zirconium composite oxide solid electrolyte doped with the oxide of Li and Ge at the grain boundary and the surface, Li₇La₃Zr_{1.7}Ge_{0.3}O₁₂. Its ionic conductivity was measured to be 6.56 × 10⁻⁴ S/cm (25°C).

### Example 33

According to the stoichiometric ratio, La(NO₃)₃ and ZrO(NO₃)₂ were prepared into a mixed solution with a total cation concentration of 1.0 M. Under a stirring condition, the mixed material liquid and 3 M aqueous ammonia solution were added to a reactor. The pH of the precipitation process was controlled to be 6.5 ± 0.2, the endpoint pH of the precipitation was 10, and the temperature was controlled to be 45°C for the precipitation reaction. The precipitate obtained was filtered, washed, and dried, and the dried product was roasted at 800°C for 9 h to obtain a lanthanum-zirconium oxide. The lanthanum-zirconium oxide was mixed with Al(NO₃)₃, TaO(NO₃)₃, and LiNO₃ liquid salts in the stoichiometric ratio of the doped Al, Ta, and Li. The mixture was dried at 100°C for 12 h, then subjected to heat treatment at 600°C for 6 h, and finally calcined at 850°C for 11 h to obtain a lithium-lanthanum-zirconium composite oxide solid electrolyte doped with the oxide of Li, Al, and Ta at the grain boundary and the surface, Li_{6.2}Al_{0.2}La₃Zr_{1.8}Ta_{0.2}O₁₂. Its ionic conductivity was measured to be 9.21 × 10⁻⁴ S/cm (25°C).

### Example 34

According to the stoichiometric ratio, La(NO₃)₃ and ZrO(NO₃)₂ were prepared into a mixed solution with a total cation concentration of 1.0 M. Under a stirring condition, the mixed material liquid and 3 M aqueous ammonia solution were added to a reactor. The pH of the precipitation process was controlled to be 9.5 ± 0.2, the endpoint pH of the precipitation was 10, and the temperature was controlled to be 40°C for the precipitation reaction. The precipitate obtained was filtered, washed, and dried, and the dried product was roasted at 800°C for 9 h to obtain a lanthanum-zirconium oxide. The lanthanum-zirconium oxide was mixed with Ga(NO₃)₃, RbNO₃, and LiNO₃ liquid salts in the stoichiometric ratio of the doped Ga, Rb, and Li. The mixture was dried at 100°C for 12 h, then subjected to heat treatment at 550°C for 8.5 h, and finally calcined at 860°C for 10.5 h to obtain a lithium-lanthanum-zirconium composite oxide solid electrolyte doped with the oxide of Li, Ga, and Rb at the grain boundary and the surface, Li_{6.5}Ga_{0.2}La_{2.95}Rb_{0.05}Zr₂O₁₂. Its ionic conductivity was measured to be 2.01 × 10⁻³ S/cm (25°C).

As can be seen from the above results, the lithium-lanthanum-zirconium composite oxide solid-state electrolyte obtained by the preparation method of the examples of the present invention has significantly improved ionic conductivity compared to the oxides prepared in the comparative examples.

The present invention relates to a solid electrolyte of lithium-lanthanum-zirconium composite oxide which is doped at surface and at grain boundary, a preparation method therefor, and an application thereof. Part of doping elements are step-doped at the grain boundary and the surface of the lithium-lanthanum-zirconium composite oxide solid electrolyte to improve the distribution state of the doping elements at the grain boundaries, reduce the number of grain boundaries, lower the grain boundary resistance of the lithium-lanthanum-zirconium composite oxide, and improve the ionic conductivity of lithium-lanthanum-zirconium composite oxide solid state electrolyte. The technical solution of the present invention provides a universally applicable grain boundary doping method, realizing an efficient and low-cost reduction of the grain boundary resistance of lithium-lanthanum-zirconium composite oxides, thereby enhancing the conductivity of ions, which can satisfy the demand for doping elements in different solid-state electrolytes and is suitable for scale-up applications.

It should be understood that the above specific embodiments of the present invention are merely for exemplary illustration or explanation of the principles of the present invention, and do not constitute a limitation of the present invention. Therefore, any modifications, equivalent substitutions, improvements, etc. made without departing from the spirit and scope of the present invention shall be included in the scope of the present invention. Furthermore, the appended claims of the present invention are intended to cover all variations and modifications falling within the scope and boundaries of the appended claims, or equivalent forms of such scope and boundaries.

## Claims

1. . A solid electrolyte of lithium-lanthanum-zirconium composite oxide which is doped at surface and at grain boundary, **characterized in that**, the chemical formula of the solid electrolyte is Li₇₋ₓLa_{3-y}Zr_{2-z}M_{α}O_{12-β}D_{δ}; wherein M comprises one or more cationic doping elements and D comprises one or more anionic doping elements; and 0 ≤ x ≤ 3, 0 ≤ y ≤ 1.5, 0 ≤ z ≤ 1, 0 <α <3, 0 ≤ β ≤ 1.5, and 0 ≤ δ ≤ 1.

2. . The solid electrolyte of lithium-lanthanum-zirconium composite oxide which is doped at surface and at grain boundary according to claim 1, **characterized in that**, at the grain boundary and the surface, the solid electrolyte contains an oxide of Li and M, oran oxide of Li and M with one or more selected from fluoride, sulfide, nitrogen-containing compound, phosphate, and complex thereof formed from Li, M, and D.

3. . The solid electrolyte of lithium-lanthanum-zirconium composite oxide which is doped at surface and at grain boundary according to claim 1 or 2, **characterized in that**, the doping element M comprises one or a combination of more than one selected from cations of Na, K, Rb, Cs, Mg, Ca, Sr, Ba, Ti, V, Cr, Mn, Fe, Co, Ni, Cu, Zn, B, Al, Ga, In, Si, Ge, Sn, Sb, Bi, Se, Te, Nb, Mo, Hf, Ta, W, and rare earth elements other than La;
preferably, the doping element M comprises one or a combination of more than one selected from cations of Ti, V, Mn, Fe, Co, Ni, Cu, Zn, Al, Ga, In, Ge, Sn, Sb, Te, Nb, Mo, Ta, Ce, Pr, Nd, Sm, Eu, Gd, Yb, Sc, and Y;
further preferably, the doping element M comprises one or a combination of more than one selected from cations of Mn, Fe, Co, Ni, Al, Ga, Nb, Ta, Ce, Pr, Nd, Sm, Gd, Yb, and Y; and
the doping element D comprises one or a combination of more than one selected from anions of N, F, P, and S.

4. . The solid electrolyte of lithium-lanthanum-zirconium composite oxide which is doped at surface and at grain boundary according to any one of claims 1-3, **characterized in that**, the molar content of the doping element M is less than or equal to 12% of the molar amount of the solid electrolyte by mole (Example 29 has been added); and
the molar content of doping element D is less than or equal to 5% of the molar amount of the solid electrolyte (Example 31 has been added).

5. . The solid electrolyte of lithium-lanthanum-zirconium composite oxide which is doped at surface and at grain boundary according to any one of claims 1-3, **characterized in that**, the lithium-lanthanum-zirconium composite oxide comprises a garnet-type structure.

6. . A preparation method for the solid electrolyte of lithium-lanthanum-zirconium composite oxide which is doped at surface and at grain boundary according to any one of claims 1-5, **characterized by** comprising the following steps:
S 1, mixing aqueous solutions of lanthanum and zirconium compounds in a desired stoichiometric ratio to obtain a mixed material liquid; adding the mixed material liquid and an alkaline substance into a reactor for a precipitation reaction; performing suction filtration, washing, drying, and roasting on the obtained precipitate to obtain a lanthanum-zirconium oxide; and
S2, mixing the lanthanum-zirconium oxide with liquid salts of doping elements M and Li under a stirring condition in one or more steps, drying and then performing once or twice heat treatments, and then performing once or twice calcinations to obtain the solid electrolyte of lithium-lanthanum-zirconium composite oxide which is doped at surface and at grain boundary.

7. . A preparation method for the solid electrolyte of lithium-lanthanum-zirconium composite oxide which is doped at surface and at grain boundary according to any one of claims 1-5, **characterized by** comprising the following steps:
S1, mixing aqueous solutions of lanthanum and zirconium, and M or a part of M compound in a desired stoichiometric ratio to obtain a mixed material liquid; adding the mixed material liquid and an alkaline substance into a reactor for a precipitation reaction; performing suction filtration, washing, drying, and roasting on the obtained precipitate to obtain an M-containing lanthanum-zirconium oxide; and
S2, mixing the M-containing lanthanum-zirconium oxide with a liquid salt of Li or a mixed liquid salt of the remaining doping element M and Li under a stirring condition in one or more steps, drying and then performing once or twice heat treatments, and then performing once or twice calcinations to obtain the solid electrolyte of lithium-lanthanum-zirconium composite oxide which is doped at surface and at grain boundary.

8. . The method according to claim 6 or 7, **characterized in that**, all or part of Li in the form of solid salt is added to the M-containing lanthanum-zirconium oxide.

9. . The method according to claim 6 or 7, **characterized in that**, the zirconium source in the mixed material liquid in step S1 comprises one or a combination of more than one selected from zirconium oxychloride, zirconium oxynitrate, zirconium sulfate, zirconium acetate, and zirconium citrate; the lanthanum source comprises one or a combination of more than one selected from lanthanum chloride, lanthanum nitrate, lanthanum sulfate, lanthanum acetate, and lanthanum citrate.

10. . The method according to claim 6 or 7, **characterized in that** the alkaline substance comprises magnesium bicarbonate, urea, and at least one selected from hydroxide, carbonate, or bicarbonate containing at least one selected from ammonium, sodium, or potassium, preferably including at least one selected from sodium hydroxide, urea, aqueous ammonia, and ammonium bicarbonate.

11. . The method according to claim 6 or 7, **characterized in that**, in step S1, adding the mixed material liquid and the alkaline substance into the reactor for the precipitation reaction, the pH during the precipitation process is controlled in the range of 4.5-14, preferably 5-10; the endpoint pH of the precipitation is controlled at 8-13, preferably 9-11; the temperature is controlled at 0-120°C, preferably 10-80°C.

12. . The method according to claim 6 or 7, **characterized in that**, the liquid salt of the doping element M or Li comprise one or a combination of more than one selected from molten salt or aqueous solution of nitrate, acetate, sulfate, citrate, and an amino acid salt.

13. . The method according to claim 6 or 7, **characterized in that**, doping element D is added in one or more of the steps S1 and S2; the doping element D is derived from one or a combination of more than one selected from nitrate, fluoride, phosphate, sulfate, and sulfide.

14. . The method according to claim 6 or 7, **characterized in that**, the roasting temperature in step S1 is 600-1000°C, preferably 700-900°C; and the roasting time is 1-24 h, preferably 3-15 h.

15. . The method according to claim 6 or 7, **characterized in that**, the heat treatment temperature in step S2 is 200-750°C, preferably 400-600°C; and the heat treatment time is 1-24 h, preferably 3-15 h.

16. . The method according to claim 6 or 7, **characterized in that**, the calcination temperature in step S2 is 700-1100°C, preferably 800-950°C; and the calcination time is 1-24 h, preferably 3-15 h.

17. . Use of the solid electrolyte of lithium-lanthanum-zirconium composite oxide which is doped at surface and at grain boundary according to any one of claims 1-5 in all-solid lithium metal or lithium ion batteries, semi-solid lithium ion batteries, lithium air batteries.
